# EUROPÄISCHE PATENTSCHRIFT

(11) **EP 1 855 469 B1**
(45) Veröffentlichungstag und Bekanntmachung des Hinweises auf die Patenterteilung: **14.09.2016**
(21) Anmeldenummer: 07017070.9
(22) Anmeldetag: 24.04.1997
(51) Int. Cl.: H04N 5/445, G06F 3/033

(54) **Elektronisches Gerät mit Stellglied zur Eingabe von Betriebsparametern**
Electronic device with actuator for entering operational parameters
Appareil électronique comportant un actionneur pour entrer des paramètres opérationnels

(30) Priorität: 25.04.1996 DE 19616624
(43) Veröffentlichungstag der Anmeldung: 14.11.2007
(62) Teilanmeldung aus: 05001214.5
(73) Patentinhaber: Sisvel International,S.A., 1526 Luxembourg (LU)
(72) Erfinder: Göken, Klaus G., 28857 Syke-Gessel (DE)
(74) Vertreter: Eisenführ Speiser

(56) Entgegenhaltungen:
- EP-A1- 0 685 953
- EP-A2- 0 366 132
- EP-A2- 0 679 003
- WO-A-94/17494
- US-A- 3 831 081

## Beschreibung

Die Erfindung betrifft ein elektronisches Gerät mit einem Bildschirm, welcher eine Bildschirmanzeigeeinrichtung zur Anzeige eines physikalischen Betriebsparamters des elektronischen Geräts auf dessen Bildschirm aufweist. Ein solches elektronsiches Gerät kann z. B. ein Monitor sein oder ein Fernsehempfänger oder eine Grafik- oder Anzeigeeinrichtung. Als nächstliegender Stand der Technik wird auf das Dokument DE-A-29 20 023 hingewiesen. Dieses Dokument offenbart einen Fernsehempfänger mit einer Zeichenerzeugungseinreichtung, welche derart gesteuert wird, dass sie für einen physikalischen Betriebsparameter, z. B. Lautstärke oder Helligkeit, ein Anzeigesignal auf dem Bildschirm erzeugt, welches aus einer Anzahl von Zeichen besteht, wobei die Anzahl der Zeichen in etwa zu dem Pegel oder der Anzahl der eingestellten Inkremente des dem Signal zugeordneten Betriebsparameters proportional ist.

Das bekannte Verfahren wird in einer Vielzahl von Variationen bei den verschiedensten Typen von Bildschirmanzeigeeinrichtungen, z. B. Monitore, Fernsehempfänger, Satellitenempfänger, Projektoren u. dgl. realisiert.

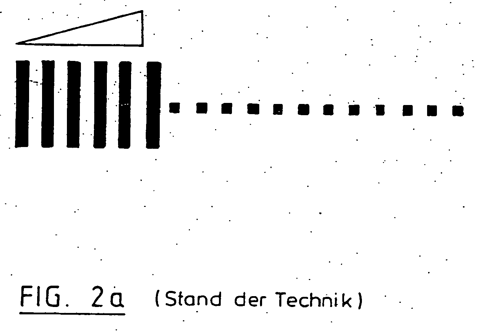

Fig. 2a) zeigt eine schematische Darstellung einer der bekanntesten Bildschirmanzeigevariationen.

Die bekannten Bildschirmanzeigen - on-Screen-Displays - kann man in zwei wesentliche Kategorien einteilen: In eine symbolische Anzeige und in eine numerische Anzeige. Bei der symbolischen Anzeige werden Zeichen, fast ausschließlich abstrakte Zeichen, erzeugt, und die Anzahl der erzeugten Zeichen ist dem Pegel des Betriebsparameters bzw. der Anzahl der eingestellten Inkremente des inkrementell einstellbaren Betriebsparameters in etwa proportional. So ist in Fig. 2a ein Beispiel dargestellt, bei dem sechs vertikal ausgerichtete Balken -als erste Zeichen -dem Benutzer eine Information über die aktuelle Einstellung des Betriebsparameters wiedergeben.

Bei der bekannten numerischen Bildschirmanzeige wird eine Zahl z. B. die Zahl 6 auf dem Bildschirm eingeblendet und die Zahl selbst ist dem Pegel des Betriebsparameters und/oder der Anzahl der eingestellten Inkremente des Betriebsparameters in etwa proportional. Selbstverständlich sind auch Mischformen der symbolischen und numerischen Anzeige anzutreffen.

In Fig. 2a) sind rechts von den vertikal aufgestellten länglichen Balken noch in etwa quadratische kleine Zeichen -als zweite Zeichen -angeordnet, so daß der Benutzer weiß, inwieweit er den anzuzeigenden Betriebsparameter ausgesteuert hat, weil die Gesamtzahl der Zeichen (Balken und kleine Zeichen) ihm ein Maß für die maximale Aussteuerung des Betriebsparameters geben.

Die voran beschriebenen Bildschirmanzeigen haben sich größtenteils bewährt, was auch dazu geführt hat, daß Bildschirmanzeigen der oben beschriebenen Art in mehr als 90% von allen Fernsehempfängern, Monitoren, Satellitenempfängern oder anderen Geräten der Unterhaltungselektronik Einzug gehalten haben, weil durch die Bildschirmanzeigen es dem Benutzer möglich ist, einen gewünschten Betriebsparameter optimal und einfach einzustellen, ohne auf die Wiedergabe eines bestimmten Videosignals angewiesen zu sein, weil durch die Bildschirmanzeige dem Benutzer ein klarer Hinweis auf die Einstellung des Betriebsparameters gegeben wird. Neben einer Vielzahl von Vorteilen der videosignalempfangsunabhängigen Bildschirmanzeige haben die bisherigen Bildschirmanzeigen jedoch auch einige Nachteile. So kann im Fall einer Bildschirmanzeige, wie sie in der Fig. 2a) dargestellt ist, der Benutzer kaum die Anzahl der ersten Zeichen schnell erkennen und kann sich deshalb nur sehr schlecht eine gewünschte Einstellung merken. Bei der in Fig. 2a) dargestellten Bildschirmanzeige sind zwar die einzelnen Zeichen voneinander unterscheidbar und deshalb deutlich zu erkennen, jedoch muß der Benutzer, wenn er sich eine Einstellung merken möchte, die einzelnen Zeichen abzählen und sich diese Zahl merken wie die Zahl bei einer numerischen Anzeige.

Es ist deshalb Ziel der Erfindung, den Benutzers des elektronischen Geräts bei der Bildschirmanzeigeeinrichtung zu unterstützen und eine einfache Bedienung hierfür vorzusehen.

Dieses Ziel wird erfindungsgemäß mit dem in Anspruch 1 angegebenen elektronischen Gerät erreicht. Vorteilhafte Weiterbildungen sind in den Unteransprüchen beschrieben.

Das Farb-und Formerinnerungsvermögen des Menschen regelmäßig deutlich besser ausgebildet ist als sein Zahlenerinnerungsvermögen. So weiß ein Autobesitzer auch noch nach 20 Jahren, welche Farbe sein erstes Automobil hatte, während er schon lange sein damaliges Nummernschild vergessen hat. Auch fällt es Menschen regelmäßig schwer, sich überhaupt Zahlen zu merken, z.B. Telefonnummern, Hausnummern etc. Gleiches gilt, wie oben bereits erwähnt, auch für eine numerische Angabe bei der Bildschirmanzeige, zumal der Benutzer durch das wiedergegebene Bild meistens so abgelenkt ist, daß er sich kaum auf die Anzahl der Zeichen oder auf eine Zahl einer numerischen Anzeige selbst konzentriert.

Es ist auch teilweise gar nicht mehr notwendig, sich die Anzahl der Zeichen zu merken, wenn sich der Benutzer nur auf dasjenige Zeichen konzentriert, welches auf das zuletzt eingestellte Inkrement bzw. den aktuellen Wert des Betriebsparameters hinweist. Auf dieses Zeichen schaut der Benutzer zwar auch bei bisherigen Bildschirmanzeigen, weil dieses Zeichen jedoch identisch (Farbe, Form) ist mit allen anderen benachbarten Zeichen, z.B. in Fig. 2a links von dem rechten Balken, kann sich der Benutzer aufgrund der Lage des Zeichens selbst keinen Eindruck über den Wert des eingestellten Betriebsparameters machen, sondern muß alle Zeichen abzählen.

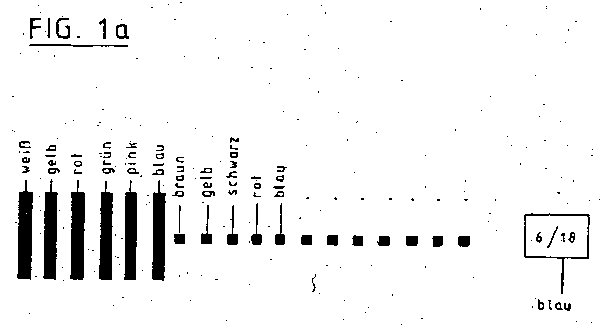

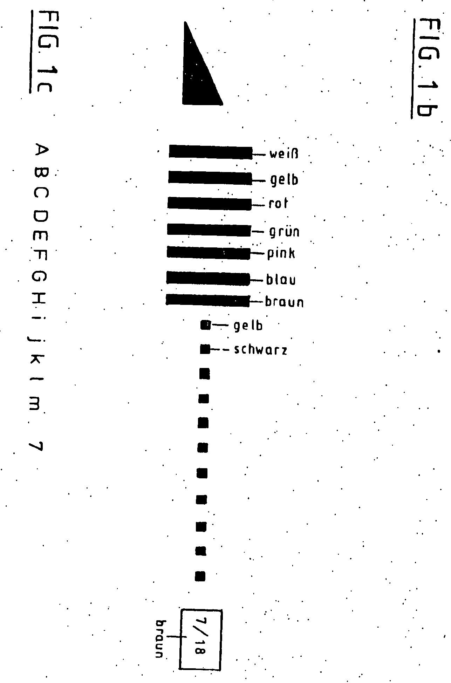

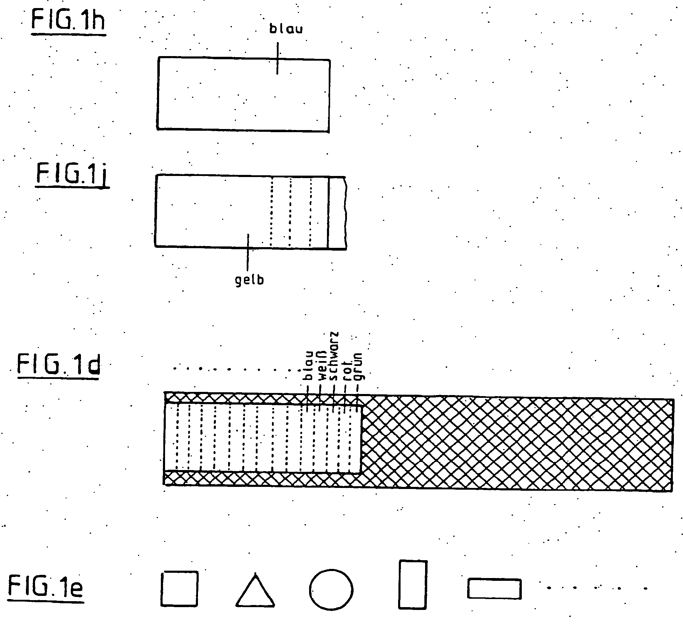

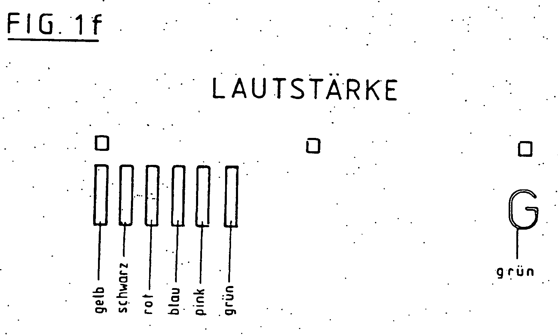

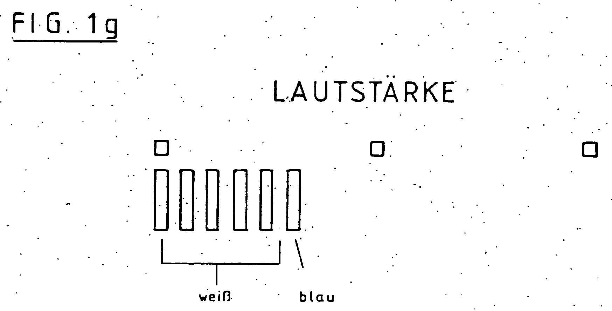

Benachbarte Zeichen bzw. Zeichen aufeinander folgender Parameterwerte ein unterschiedliches Aussehen haben, z.B. in ihrer Farbe und/oder Form. Verschiedene Beispiele hierfür sind in Fig. 1 dargestellt. Bei einer numerischen Anzeige ist die Zahlanzeige einem bestimmter Farb-und/oder vom Wert zugeordnet, d. h., daß sich mit einer Änderung der numerischen Anzeige stets auch eine Farb-und/oder Form-Änderung der Zahlenangabe selbst oder deren Hintergrund einstellt. Der Benutzer braucht sich also nur noch statt einer Zahl die zugeordnete Farbe und/oder Form zu merken, um zu einer gewünschten Einstellung zurückzukehren bzw. um sich den aktuellen Wert zu merken.

Durch die Erzeugung von unterschiedlichen Farbsignalen für benachbarte Zeichen erscheinen die einzelnen Zeichen in unterschiedlichen Farben auf dem Bildschirm, was nicht nur zum Erinnerungsvermögen des Benutzers dient, sondern auch den ästhetischen Eindruck der Bildschirmanzeige deutlich verbessert.

Die Erfindung ist nachfolgend anhand zeichnerisch dargestellter Ausführungsbeispiele näher erläutert. In der Zeichnung stellen dar:
- Fig. 1a-j: Darstellungsbeispiele verschiedener Anzeigen;
- Fig.2a: Darstellungsbeispiel einer bekannter Bildschirmanzeige;
- Fig.2b: Darstellungsbeispiel einer alternativen Bildschirmanzeige zu Fig. 1;
- Fig.3: ein Blockschaltbild der wesentlichen Baugruppen eines Bildwiedergabegerätes;
- Fig.4: ein Blockdiagramm eines Bildschirmanzeigesystems;
- Fig.5a: eine Ansicht eines erfindungsgemäßen Bedienungsorgans;
- Fig.5b: ein Blockschaltdiagramm mit einem erfindungsgemäßen Bedienungsorgan;
- Fig.5c: Beispielansicht einer auf einem Bildschirm eingeblendeten Menütabelle, die von dem Bedienorgan ansteuerbar ist;
- Fig.5d: eine Seitenansicht eines erfindungsgemäßen Bedienungsorgans; und
- Fig.5e: eine Aufsicht auf eine Fernbedienung mit einem erfindungsgemäßen Bedienungsorgan.

Fig. 1a zeigt eine Bildschirmanzeige bestehend aus einer Gruppe von ersten Zeichen, die durch farbige vertikal ausgerichtete Balken gekennzeichnet sind, und einer Gruppe aus zweiten Zeichen, welche als kleinere Quadrate rechts von den Balken angeordnet sind. Benachbarte Zeichen sind in einer deutlich unterschiedlichen Farbe ausgeführt. Die in Fig. 1 dargestellte Anzeige weist den Benutzer darauf hin, daß er eine Einstellung eines physikalischen Betriebsparameters vorgenommen hat, welche den sechs ersten Zeichen entspricht und daß das blaue erste Zeichen auf das zuletzt eingestellte Inkrement hindeutet. Erhöht der Benutzer den Wert des Betriebsparameters, so wird je nach Proportionalität der Zuordnung der ersten Zeichen zu den aufgerufenen Inkrementen, früher oder später das zweite Zeichen in braun, welches in Fig. 1a rechts von dem blauen ersten Zeichen angeordnet ist, durch eine Zeichenform entsprechend dem ersten Zeichen ersetzt, verbleibt jedoch in der Farbe pink. Eine solche Einstellung ist in Fig. 1b gezeigt.

Der Benutzer muß sich nicht unbedingt an die Zahl der ersten Zeichen erinnern, um später die gewünschte Einstellung wieder aufzurufen, sondern merkt sich automatisch die Farbe desjenigen ersten Zeichen, welches auf die gewünschte Einstellung hinweist.

Selbstverständlich ist es auch möglich, daß die zweiten Zeichen durchgehend in der gleichen Farbe erscheinen oder daß die Zeichen, welche in Fig. 1a links von dem blauen Zeichen angeordnet sind, unifarben gestaltet sind. Es ist jedoch wichtig, daß einem bestimmten Wert eines physikalischen Parameters bzw. das ihn repräsentierende Zeichen in einer bestimmten Farbe auf dem Bildschirm erscheint. Benachbarte Zeichen bzw. Betriebsparameterwerte sollten daher vorzugsweise stets in unterschiedlichen Farben auf dem Bildschirm erscheinen bzw. symbolisiert werden. Selbstverständlich ist es möglich, daß sich eine bestimmte Farbfolge nach einer bestimmten Anzahl von Zeichen wiederholt.

Fig. 1c zeigt eine alternative Bildschirmdarstellung, wobei die ersten Zeichen durch Großbuchstaben und die zweiten Zeichen durch Kleinbuchstaben repräsentiert werden. Ferner unterscheiden sich die einzelnen Zeichen untereinander durch ihren Buchstabenwert.

In Fig. 1d ist eine zu Fig. 1a vergleichbare Bildschirmdarstellung gezeigt, wobei die ersten Zeichen zu einem Balken geschmolzen sind, weil keine Lücken zwischen benachbarten ersten Zeichen vorhanden sind.

In Fig. 1e sind benachbarte Zeichen durch eine unterschiedliche Zeichenform gestaltet. In Fig. 1f sind die zweiten Zeichen weggelassen. Es ist selbstverständlich, daß die Einblendung einer numerischen Anzeigen wie in Fig. 1a, 1b wahlweise erfolgen kann oder die abstrakten Zeichen ersetzen können.

In Fig. 1g ist nur dasjenige Zeichen farbig gestaltet, welches auf den aktuellen Wert des Betriebsparameters hinweist Erhöht sich der Wert des Betriebsparameters und wird ein weiteres erstes Zeichen aufgerufen, so erscheint dies in einer anderen Farbe, z. B. gelb und alle Zeichen links von dem farbigen (jetzt gelben) Zeichen sind einfarbig gestaltet.

In Fig. 1h ist ein blauer Balken gezeigt, welcher aus mehreren blauen Rechtsecken besteht, die zu einem Balken verschmolzen sind. Mit Erhöhung des Betriebsparameterwertes um ein weiteres Inkrement, d. h. mit Höhe des Einstellwertes um eine weitere Einheit -siehe Fig. 1j - wird der gesamte Balken gelb und die Zahl der Zeichen, d. h. der Rechtecke, ist um 1 erhöht

Fig. 2a zeigt eine bekannte unifarbene Bildschirmanzeigedarstellung.

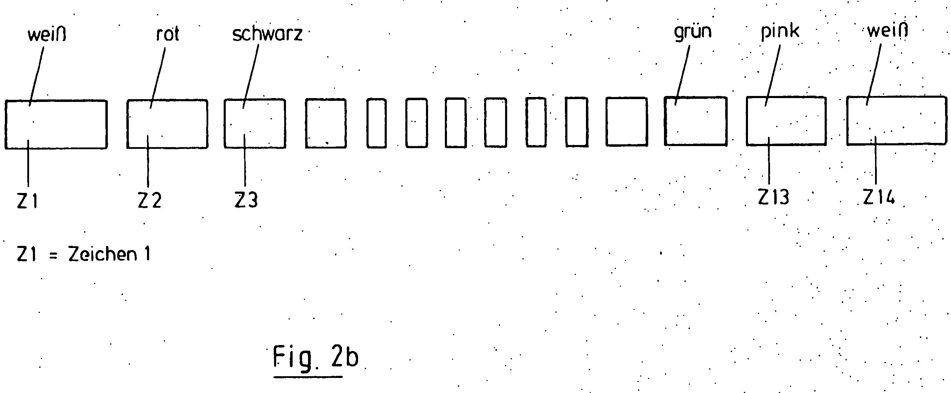

Fig. 2b zeigt eine Bildschirmanzeigedarstellung, bei der die Schrittweite bzw. der Inkrementenhub eines Betriebsparameters im Bereich der Maximalwerte deutlich größer ist als im Bereich der Normaleinstellung, z.B. der Zimmerlautstärke.

Hierbei ist die Größe bzw. Länge eines einzelnen Zeichens dem entsprechenden Inkrementenhub in etwa proportional. Dies erlaubt es dem Benutzer, im Bereich der Normaleinstellung, z.B. der Zimmerlautstärke, sehr feine Unterschiede einzustellen, während im Bereich der Minimal-bzw. Maximalwerte größere Inkrementen-Schrittweiten vorgesehen sind, weil es in diesen Bereichen dem Benutzer erfahrungsgemäß weniger auf eine sehr feine Einstellung ankommt. Bei der Lautstärkeeinstellung können folgende Zuordnungen der Zeichen zu dem Inkrementenhub/Schrittweite vorgesehen werden:

| | |
|---|---|
| Zeichen 1 | 10 dB |
| Zeichen 2 | 8 dB |
| Zeichen 3 | 6 dB |
| Zeichen 4 | 4 dB |
| Zeichen 5 | 0,5 bis 1 dB |
| Zeichen 6 | 0,5 bis 1 dB |
| Zeichen 7 | 0,5 bis 1 dB |
| Zeichen 8 | 0,5 bis 1 dB |
| Zeichen 9 | 0,5 bis 1 dB |
| Zeichen 10 | 0,5 bis 1 dB |
| Zeichen 11 | 4 dB |
| Zeichen 12 | 6 dB |
| Zeichen 13 | 8 dB |
| Zeichen 14 | 20 dB |

Somit wird dem Benutzer eine Bedienungsvereinfachung zur Verfügung gestellt, die seinen persönlichen Wünschen entgegenkommt und ihm gleichzeitig erlaubt, sich ein Bild über die aktuelle Einstellung eines Betriebsparameters zu machen.

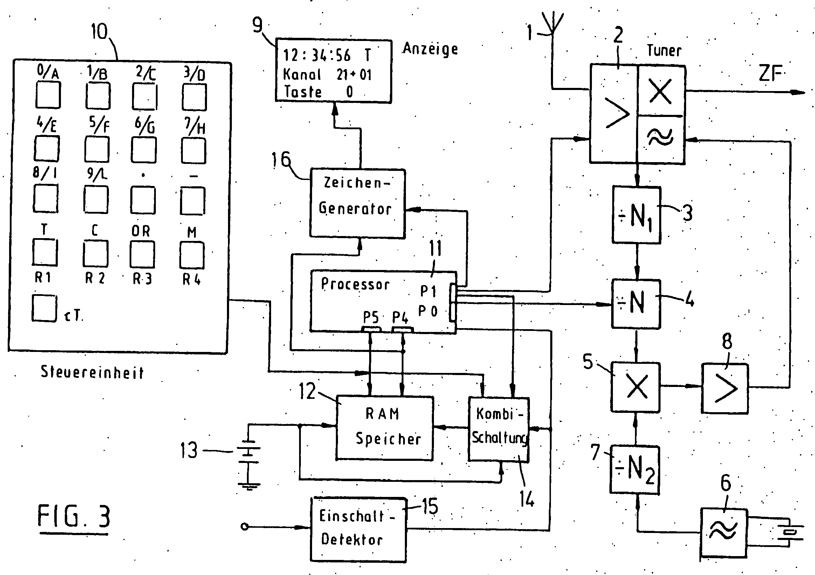

In Fig. 3 ist ein Blockschaltbild eines Wiedergabegerätes, im gezeigten Beispiel ein Fernsehempfänger, dargestellt mit einer Empfangsantenne 1, die mit einem Tuner 2 mit veränderlichen Kapazitätsdioden verbunden ist. Am Ausgang des Tuners steht ein auf eine Zwischenfrequenz IF umgesetztes Signal zur Verfügung. Der Tuner 2 kann in bekannter Weise aufgebaut sein und besteht im wesentlichen aus einer selektiven Verstärkerstufe, einem Mischer und einem internen Oszillator.

Der Ausgang des Oszillators ist mit einem ersten Frequenzteiler 3 verbunden, der die Ausgangsfrequenz des Oszillators durch einen fest vorgegebenen Divisor N teilt. Der Ausgang des ersten Frequenzteilers ist mit dem Signaleingang eines zweiten Frequenzteilers 4 verbunden, der die Ausgangsfrequenz des ersten Frequenzteilers durch einen variablen Divisor N teilt und der mit 12-Bit Programmiersignalen ansteuerbar ist, so daß er durch jeden Divisor N zwischen 1 und 2¹² teilen kann.

Der Ausgang des zweiten Frequenzteilers 4 ist mit einem ersten Eingang eines Phasen-Frequenz-Komparators 5 verbunden, an dessen zweitem Eingang ein Referenzsignal anliegt, welches von einem Quarzgenerator 6 über einen dritten Frequenzteiler 7 zugeführt wird. Der Ausgang des Komparators 5 ist über einen Verstärker-und Filterkreis 8 mit dem Steuereingang des Tuners 2 verbunden.

Weiterhin ist eine Steuereinheit 10, z.B. eine Fernbedienung, vorgesehen, welche neben den übrigen Steuertasten für das Ein-und Ausschalten, die Lautstärke, Helligkeit, Kontrast und Farbabstimmung zusätzlich 10 Zifferntasten aufweist, die mit 0 bis 9 (oder als Buchstabentasten mit den Buchstaben A bis L) bezeichnet sind. An der Steuereinheit 10 sind weiterhin sieben Hilfstasten vorgesehen, die mit den Symbolen +, -, t, c, or, m, ct (oder +, -, r1, r2, r3, r4, ct) bezeichnet sind.

Die Steuereinheit 10 ist mit einer ersten Gruppe von acht Eingahgs/Ausgangs-Anschlossen eines Prozessors 211 und mit den Adresseneingängen an Speicher 12 verbunden. Der Prozessor 11 weist außerdem einen zweiten Satz von acht Eingangs/Ausgangs-Anschlüssen auf, die mit den Dateneingangs/Ausgangs-Anschlüssen des Speichers 12 und außerdem mit den Eingängen eines Zeichengraphikgenerators 16 verbunden sind, der mit einer Anzeigeeinheit 9 verbindbar ist (welcher Bestandteil der Bildröhre der Empfängereinheit ist). Eine dritte Gruppe von 16 Anschlüssen des Prozessors 11 ist mit folgenden Anschlüssen der weiteren Schaltkreise verbunden:
- mit 12 Programmiereingängen des zweiten Frequenzteilers 4,
- mit 2 Band-Umschalteingängen (U und B III) des Tuners 2,
- mit einem Steuereingang des Zeichengenerators 16,
- mit einem ersten Eingang einer Kombinierschaltung 14.

Der Speicher 12 besitzt weiterhin zwei Steuereingänge, die mit dem Ausgang der Kombinierschaltung 14 verbunden sind, die an einem zweiten Eingang ein Signal des Prozessors 11 und an einem dritten Eingang ein Signal von einem Einschaltdetektor empfängt. Der Detektor 15 empfängt seinerseits ein Signal von der Hauptspannungsversorgung des Fernsehempfängers, während sein Ausgang zusätzlich mit einem Rückstelleingang des Prozessors 11 verbunden ist. Der Speicher 12 und die Kombinierschaltung 14, welche aus CMOS-Elementen aufgebaut ist und einen geringen Stromverbrauch hat, sind mit einer internen Speicherspannungsquelle, insbesondere mit einer Batterie 13 verbunden.

Die Schaltkreise 3, 4, 5 und 8 bilden zusammen mit dem internen spannungsgesteuerten Oszillator (VCO) des Tuners 2 eine phasenstarre Schleife, die in bekannter Weise durch das von dem dritten Frequenzteiler 7 heruntergeteilte Ausgangssignal des Quarzgenerators 6 gesteuert wird.

Bei geeigneter Steuerung über das Tastenfeld sind unter Anwendung teilweise üblicher Verfahren verschiedene Betriebsarten mögliche, um eine Abstimmung auf eine vorgegebene Sendestation vorzunehmen.

Betätigt der Benutzer eine Betriebsparametereinstellungstaste auf der Fernbedienung, so erscheint automatisch eine Bildschirmanzeige in der Ausgestaltung nach Fig. 1. Bei der Betriebsparametereinstellung wird ein Befehl der Fernbedienung an das zu steuerende Gerät geschickt und dieser Befehl von dem Prozessor 11 verarbeitet. Der Prozessor 11 ist zur Steuerung des Betriebsparameters mit dem Speicher 12 verbunden, in dem die Betriebsparameterdaten und die entsprechenden Schrittweiten der Betriebsparameter gespeichert sind. Ferner ist der Prozessor 11 mit dem Zeichengenerator 16, der ferner einen Zeichenspeicher aufweist, zur Einblendung der Bildschirmanzeige verbunden. Die einem Einstellwert eines Betriebsparameters zugeordneten Form-und/oder Farbsignale bzw. -Daten sind in dem Prozessor 11 oder vorzugsweise zusammen mit den einzelnen Einstellwerten im Speicher 12 gespeichert und werden bei Einstellung eines bestimmten Parameters abgerufen und als entsprechender Farb-oder Formbefehl an den Zeichengenerator weitergeleitet. Die Farb-und/oder Formsignale aufeinanderfolgender Einstellwerte sind wie zuvor beschrieben unterschiedlich, wobei für die entsprechende Wiedergabe eine Vielzahl von Variationen denkbar sind, von denen Fig. 1 nur einige vorteilhafte Beispiele zeigt.

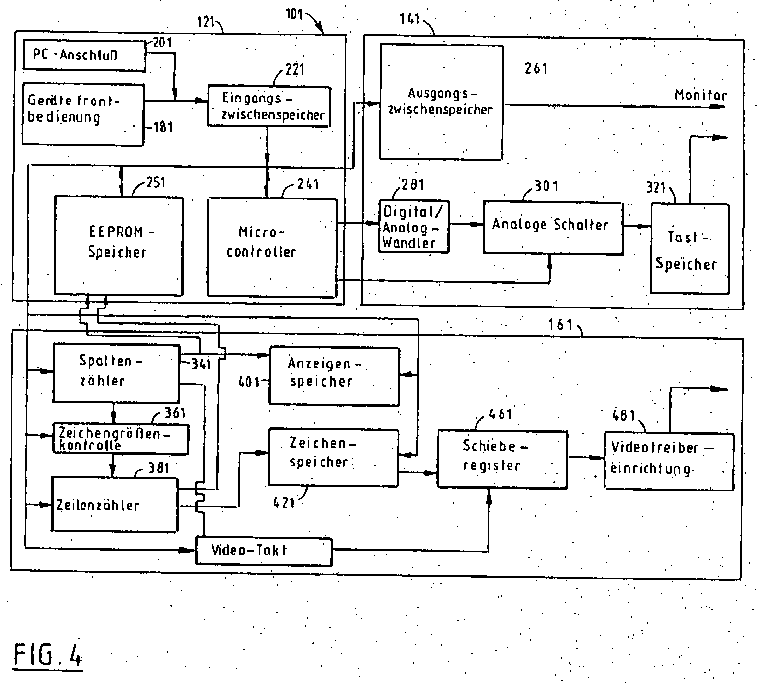

Zum besseren Verständnis der Bildschirmanzeigendarstellung wird auf Fig. 4 verwiesen. Hierbei besteht das Bildschirmanzeigemenüsystem 101 aus drei funktionalen Blöcken. Einem Eingangs-, Speicher- und Steuerblock 121, einem Videoanzeigeeinstellungsblock 141 und einem Zeichenanzeigenblock 161. Innerhalb des Blocks 121, welcher entweder Teil einer Gerätefrontbedienung 181 oder eines PC-Anschlusses 201 ist, können entsprechende Tasten zur Einstellung ausgewählter Betriebsparameter in dem System 101 bedient werden. Die Eingabewerte werden für bestimmte Zeit in einem Zwischenspeicher 221 gespeichert. Ein Mikrocontroller 241 empfängt diese Eingabeinformationen von dem Eingangszwischenspeicher 221, und speichert die geänderten Eingabewerte des anzuzeigenden Betriebsparameters in einem EEPROM-Speicher 251.

Der Mikrocontroller 241 ist im Anzeigeeinstellungsblock 141 mit einem Digital/-AnalogWandler 281 (DAC) verbunden, welcher einen digitalen Einstellwert in ein analoges Signal wandelt und dieses entsprechend an einen analogen Schalter überträgt, damit ein Betriebsparameterwert seinen vom Benutzer gewünschten Wert annimmt.

Der Zeichenanzeigeblock 161 enthält die Hardware zum Erzeugen und Aussenden der Bildschirmanzeigeinformationen zu einer Anzeigeeinheit (nicht dargestellt). Die Funktionsweise der Zeichenerzeugung selbst ist z.B. aus EP-O 543 089 bekannt. Durch einen entsprechenden Befehl des Mikrocontrollers 241 werden aus dem Zeichenspeicher (Zeichen PROM) 421 Zeichen vorbestimmter Größe, Form und Farbe ausgewählt und zu einer Bildschirmanzeigezeile in dem Anzeigenspeicher 401 zusammengestellt. Das Ergebnis wird über eine Videotreibereinrichtung 481 an die Anzeigeeinheit abgegeben und erscheint somit auf dem gewünschten Bildschirm in der gewünschten Form. Ändert sich der Wert eines Betriebsparameters und damit die Zahl der ersten Zeichen, so wird eine entsprechend geänderte Bildschirmanzeigenzeilenzusammenstellung vorgenommen und angezeigt.

Ein Betriebsparameter kann nur vorbestimmte Werte annehmen, die abschließend im dem Steuerblock 121 z. B. in Form einer Tabelle im Speicher 251 gespeichert sind.

Ist beispielsweise vorgesehen, daß bei jeder Lautstärkeerhöhung, die nur stufenweise erfolgen kann, mit dem nächst höheren Lautstärkenwert eine Lautstärkeanhebung von 5 dB vorgesehen ist, so beträgt der Inkrementenhub 5 dB. Durch eine entsprechende Speicherung können die gewünschten Inkrementenhübe vorher festgelegt werden. Durch eine entsprechende Programmzuordnung eines Betriebsparameters zu einem Zeichen können einem entsprechenden Inkrement entsprechende Zeicheninformationen, Form, Farbe, Größe etc., zugeordnet werden und entsprechende Bildschirmanzeigen zusammengestellt werden.

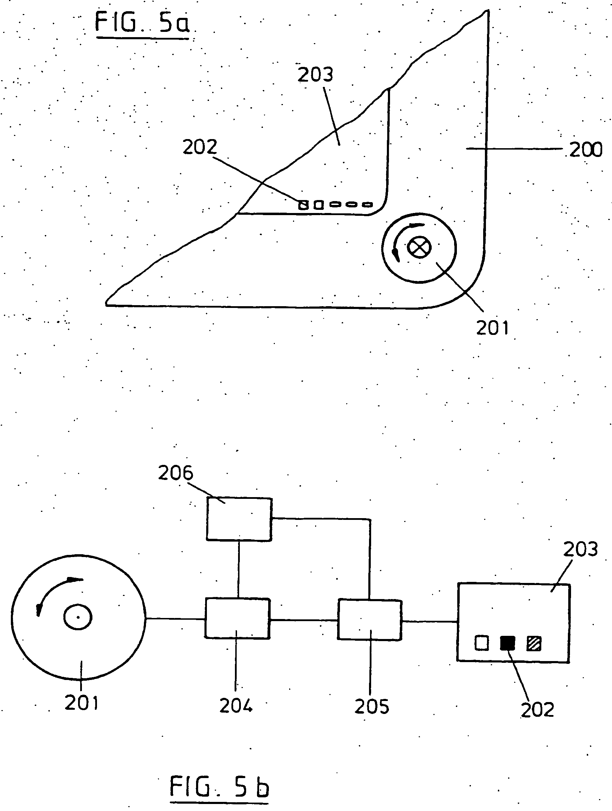

Fig. 5a zeigt eine Teilansicht eines elektronischen Gerätes, z.B. eines Fernsehempfängers 200 oder eines Monitors. Das Gerät verfügt über ein Einorgan-Stellglied 201 mittels dem sowohl verschiedene Betriebsparameter-modi aufrufbar, als auch im Wert einstellbar sind und mit dem ferner das Gerät ein-und ausschaltbar ist.

Das Einorganstellglied 201 ist ein Stellglied, welches drehbar ist und eindrückbar und/oder herausziehbar ist. Dem Stellglied ist -siehe Fig. 5b- ein Bewegungsaufnehmer 204 zugeordnet, welcher entsprechende Bedienaktionen des Bedienorgangs erfaßt und in entsprechende Signale umwandelt, die von einer Signalauswerte-Steuereinheit 205, z.B. einem Mikroprozessor, ausgewertet und in Befehlssignale umgesetzt werden. Diese Befehlssignale werden zur gewünschten Steuerung des Gerätes als auch zum Aufruf eines gewünschten Bildschirmanzeigesignals 202 auf dem Bildschirm 203 verwendet.

Ferner kann das Bedienorgan mit einer Zeitschaltuhr 206 verbunden werden, welche die zeitliche Dauer einer Bedienaktion erfaßt und ein entsprechendes Zeitsignal an die Auswerteeinheit sendet. Wird beispielsweise das Stellglied für eine bestimmte Zeit gedrückt (d.h. in die Zeichenebene hinein), so sendet die Zeitschaltuhr nach Überschreiten einer vorbestimmten Zeitdauer einen Befehl an die Auswerteeinheit, die dieses Signal als Ausschalt-oder Einschaltsignal, je nachdem welcher Zustand vorher erreicht war, wertet und schaltet das Gerät ein oder aus.

Solange das Stellglied nur eine vorbestimmte kürzere Zeitdauer eingedrückt oder herausgezogen ist, so wird dies dahingehend ausgewertet, daß der Benutzer einen nächsten Betriebsparametermodus einstellen möchte. Hierzu wird auf dem

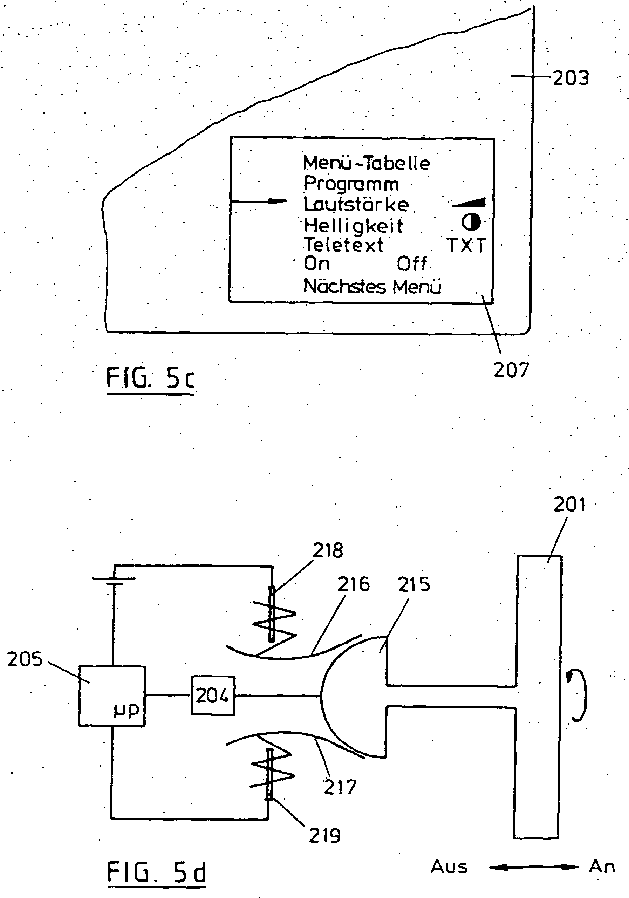

Bildschirm ein entsprechendes Menüsystem - Fig. 5c -angezeigt, bei dem mittels eines entsprechenden Zeigers, z. B. eines Cursors oder einer entsprechenden Farbmarkierung, auf einen Betriebsmodus, z.B. Lautstärke, Helligkeit, usw. hingewiesen wird. Weist der Zeiger auf einen Betriebsmodus wie Lautstärke hin, so kann der Benutzer durch Drehen des Bedienorgans den gewünschten Wert einstellen. Bei einem Drehen nach links wird der Wert des Betriebsparameters verringert, bei einem Drehen nach rechts wird der Wert des Betriebsparameters vergrößert, während eine gemäß Fig. 1 gezeigte Bildschirmdarstellung 202 auf dem Bildschirm erscheint.

Somit können sämtliche gewünschte Funktionen des zu steuernden Gerätes mit einem einzigen Bedienungsorgan bedient werden.

Drückt nun der Benutzer das Stellglied länger als z.B. 2 Sekunden, so wird ein entsprechendes Ausschaltsignal von der Auswerteeinheit erfaßt und das Gerät wird ganz abgeschaltet.

Die Ausschaltfunktion kann auch dadurch erreicht werden, daß das Bedienorgan nach Überwindung eines Druckpunktes -siehe Fig. 5d- eingedrückt wird und ein entsprechender Ausschaltkontakt nach Eindringen des Bedienorgans in das Gerät zustande kommt, der für die Ausschaltung sorgt. Durch Herausbewegung bzw. Herausziehen des Stellgliedes 201 kann dann die Einschaltung des Gerätes erreicht werden. Bei der in Fig. 5d dargestellten Ansicht weist das Bedienorgan 201 einen Kopf 215 auf, welcher beim Eindrücken von zwei Federn gelagerten Schalen 216, 217 aufgenommen wird. Wird der Federdruck entsprechend überwunden, kontaktieren die Schalen mit entsprechenden Gegenkontakten 218 und 219, so daß ein Schaltkontakt entsteht, welcher für die Ausschaltung des Gerätes sorgt.

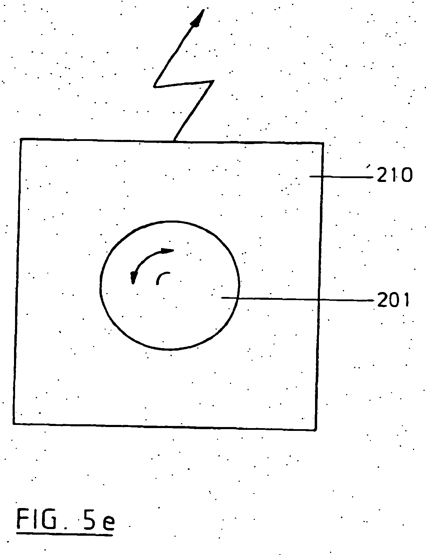

Das Bedienorgan ist eine sehr vorteilhafte Ergänzung zur vorstehend beschriebenen Bildschirmanzeige, kann jedoch auch unabhängig hiervon verwirklicht werden. Selbstverständlich kann das Einorgan-Stellglied 201 auch auf einer Fernbedienung ausgebildet sein, wie in Fig. 5e dargestellt. Eine solche Fernbedienung weist dann lediglich nur noch ein einziges Bedienorgan auf, mit dem sämtliche oder die meisten Bedienfunktionen einstellbar sind. Für den Programmaufruf kann selbstverständlich auch eine bekannte Zehnertastatur vorgesehen werden. Es sind zwar "Trackballs" oder "Jock Shuttles" auf Fernbedienungen bekannt, jedoch weisen diese keine Ausschaltfunktion auf.

## Patentansprüche

1. Elektronisches Gerät mit einem Bildschirm, welcher eine Bildschirmanzeigeeinrichtung zur Anzeige eines physikalischen Betriebsparameters des elektronischen Geräts auf dessen Bildschirm aufweist,
wobei das Gerät Mittel zum Einstellen des physikalischen Betriebsparameters, nämlich Lautstärke und/oder Helligkeit aufweist, und das Mittel zum Einstellen des Betriebsparameters aus einem drück- und in zwei Richtungen drehbaren Einorgan-Stellglied besteht,
wobei dem Einorgan-Stellglied ein Bewegungsaufnehmer (204) zugeordnet ist, welcher entsprechende Bedienaktionen des Bedienorgans erfaßt und in entsprechende Signale umwandelt, die von einer Signalauswerte-Steuereinheit (205), z. B. einem Mikroprozessor ausgewertet und in Befehlssignale umgesetzt werden,
wobei diese Befehlssignale sowohl zur gewünschten Steuerung des Geräts als auch zum Aufruf eines gewünschten Bildschirmanzeigesignals (202) auf dem Bildschirm (203) verwendet werden und
wobei durch Drücken des Einorgan-Stellgliedes der Betriebsmodus eines Betriebsparameters aufrufbar und auf dem Bildschirm darstellbar ist und dass durch Drehen des Einorgan-Stellgliedes in eine der beiden Richtungen die Werteinstellung des aufgerufenen Betriebsparameters durchgeführt und auf dem Bildschirm als Bildschirmanzeigesignal (202) angezeigt wird und dass das Einorgan-Stellglied mit einem Mikroprozessor gekoppelt ist, welcher einen Zeichengenerator steuert und dass in Abhängigkeit der zeitlichen Dauer einer Bedienaktion ein Anzeigesignal erzeugt wird, dessen Größe in etwa proportional zur zeitlichen Dauer einer Bedienaktion des Einorgan-Stellgliedes ist.

## Claims

1. Electronic device with a screen which has a screen display apparatus for displaying a physical operational parameter of the electronic device on its screen,
wherein the device has means for adjusting the physical operational parameter, namely volume and/or brightness, and the means for adjusting the operational parameter consists of a one-element actuator which can be pushed, and is rotatable in two directions,
wherein the one-element actuator is allocated a motion sensor (204) which detects corresponding operating actions of the operating element and converts them into corresponding signals, which are evaluated by a signal evaluation control unit (205), e.g. a microprocessor, and are converted into command signals,
wherein these command signals are used both for the desired control of the device and for calling up a desired screen display signal (202) on the screen (203) and
wherein by pushing the one-element actuator, the operational mode of an operational parameter can be called up and displayed on the screen, and that by rotating the one-element actuator in one of the two directions, the value adjustment of the called-up operational parameter can be implemented and displayed on the screen as screen display signal (202), and that the one-element actuator is coupled to a microprocessor which controls a symbol generator, and that in dependence on the duration of an operating action, a display signal is generated, the size of which is approximately proportional to the duration of an operating action of the one-element actuator.

## Revendications

1. Appareil électronique pourvu d'un écran, qui présente un dispositif d'affichage d'écran pour afficher un paramètre de fonctionnement physique de l'appareil électronique sur l'écran de ce dernier,
dans lequel l'appareil présente des moyens pour régler le paramètre de fonctionnement physique, à savoir l'intensité sonore et/ou la luminosité, et le moyen pour régler le paramètre de fonctionnement est constitué d'un organe de réglage à un organe pouvant être enfoncé et tourné dans deux directions,
dans lequel un capteur de mouvement (204) est associé à l'organe de réglage à un organe, lequel détecte des actions d'utilisation correspondantes de l'organe d'utilisation et les transforme en des signaux correspondants, qui sont analysés par une unité de commande d'analyse de signaux (205), par exemple un microprocesseur et sont convertis en des signaux d'instruction,
dans lequel lesdits signaux d'instruction sont utilisés aussi bien pour commander de manière souhaitée l'appareil et pour appeler un signal d'affichage d'écran (202) souhaité sur l'écran (203), et
dans lequel le mode de fonctionnement d'un paramètre de fonctionnement peut être appelé en enfonçant l'organe de réglage à un organe et être affiché sur l'écran et que le réglage de valeur du paramètre de fonctionnement appelé est effectué en tournant l'organe de réglage à un organe dans l'une des deux directions et est affiché sur l'écran en tant que signal d'affichage d'écran (202) et que l'organe de réglage à un organe est couplé à un microprocesseur, qui commande un générateur de caractères et qu'un signal d'affichage est produit en fonction de la durée dans le temps d'une action d'utilisation, dont la dimension est approximativement proportionnelle à la durée dans le temps d'une action d'utilisation de l'organe de réglage à un organe.
